# EUROPEAN PATENT SPECIFICATION

(11) **EP 2 957 172 B1**
(45) Date of publication and mention of the grant of the patent: **17.05.2017**
(21) Application number: 15172927.4
(22) Date of filing: 19.06.2015
(51) Int. Cl.: A01K 97/22

(54) **FISHING SEAT BOX**
ANGELSITZKISTE
PANIER-SIÈGE DE PÊCHE

(30) Priority: 19.06.2014 IT PD20140155
(43) Date of publication of application: 23.12.2015
(73) Proprietor: Bedin, Michele, 37044 Cologna Veneta (VR) (IT)
(72) Inventor: Bedin, Michele, 37044 Cologna Veneta (VR) (IT)
(74) Representative: Locas, Davide

(56) References cited:
- CN-U- 203 505 362
- GB-A- 2 415 896
- GB-A- 2 487 415
- US-A- 6 119 812

## Description

The present invention relates to a fishing seat box.

In the field of sport fishing, there is a known way of using auxiliary structures, usually called fishing seat boxes, provided with seats on which the sportsman sits for the purpose of fishing.

More particularly, in the case of competition fishing seat boxes, or high-specification seat boxes in general, these form true portable fishing stations, including a frame to which a seat can be fastened and a footplate on which the user can place his feet while fishing. These seat boxes also have support legs for keeping the frame and footplate raised above a supporting surface, such as a river bank, and have one or more rod holder or accessory holder bars.

Known seat boxes typically have a frame formed by a support base of substantially rectangular shape to which the footplate is connected, a support structure to which the seat can be fastened, and elements for joining the support structure to the support base.

The support structure is generally joined to the support base by means of columns which extend at the vertices of the support base, substantially orthogonally to the latter, so that the seat is located in a position higher than, and spaced apart from, the support base.

Thus a compartment is formed between the seat and the support base for receiving auxiliary elements of the seat box.

Alternatively, the support structure is joined to the support base by means of substantially rectangular supports extending along the whole length of the lateral sides of the support base.

An example of a fishing seat box having the aforesaid characteristics is described in EP 1 905 299 B1.

The patent EP 1 905 299 B1 relates to a fishing seat box comprising a rectangular support base, and a pair of rectangular supports having a central hole which is also rectangular, fastened at the lateral sides of the support base to support a support structure, such as a horizontal shelf, for the seat of the seat box.

The rectangular supports, running along the whole extension of the lateral sides of the support base, have two portions extending at the vertices of the support base, substantially orthogonally to the latter.

A similar seat box is also disclosed in GB 2 487 415.

The applicant has observed that these known seat boxes have a number of drawbacks.

A first drawback is due to the overall weight of the seat box frame, which would inevitably make it difficult to carry the seat box by hand to the location where fishing is to take place.

Additionally, in the applicant's opinion, this known seat box is difficult to grasp by its lateral parts, and offers restricted lateral access to the compartment formed between the support base and the support structure.

The fundamental technical problem of the present invention is therefore that of providing a fishing seat box whose structural and functional design is such that all the aforementioned drawbacks of the cited prior art can be overcome.

This problem is resolved by means of a fishing seat box according to Claim 1.

Preferred characteristics of the invention are defined in the dependent claims.

The invention according to the present invention makes it possible to provide a fishing seat box which is robust but relatively lightweight, having a frame whose shape allows the user, a fisherman for example, to move the seat box easily, thus reducing the time required for positioning.

Consequently the fishing seat box according to the invention is easier to use than the known seat boxes.

The characteristics and further advantages of the invention will be more clearly apparent from the following detailed description of a preferred, but non-exclusive, example of embodiment of the invention, illustrated, for guidance and in a non-limiting way, with reference to the attached drawings, in which:
- Figure 1 is a perspective view of a fishing seat box provided with support legs according to the invention, in which the footplate is in the extended position;
- Figure 2 is a perspective view of a fishing seat box according to the invention, in which the footplate is in the retracted position;
- Figure 3 is a front view of a fishing seat box provided with support legs according to the invention;
- Figure 4 is a rear view of a fishing seat box according to the invention;
- Figure 5 is a partial side view of a fishing seat box according to the invention;
- Figure 6 is a view of a detail of the frame of a fishing seat box according to the invention;
- Figure 7 is a partial view of attachment means for a support leg of the seat box according to the invention, in which some members are removed from the attachment means to improve the clarity of the illustration; and
- Figure 8 is a partial view of means for locking the footplate of the seat box according to the invention.

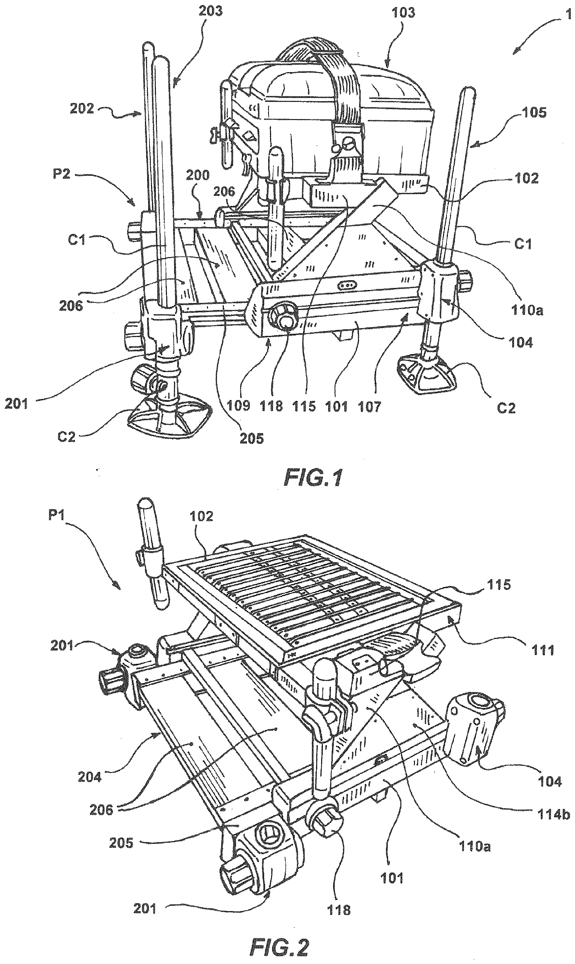

With initial reference to Figure 1, a fishing seat box is indicated as a whole by the reference numeral 1.

The fishing seat box 1 comprises a frame 100 and a footplate 200, of substantially rectangular shape, comprising attachment means 201 for a first pair of support legs 202, 203 in a first portion 204 of the footplate 200.

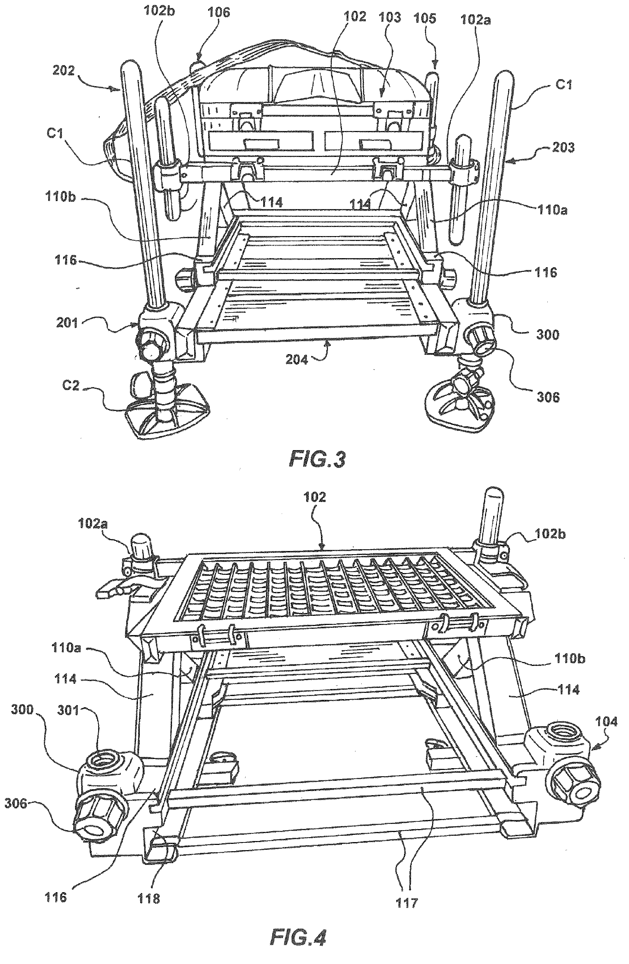

The frame 100 comprises, in turn, a support base 101 and a support structure 102 to which a seat 103 of the fishing seat box is fastened or fastenable (Figures 2 and 3).

The support base 101 is of substantially rectangular shape and comprises attachment means 104 for a second pair of support legs 105, 106 in a rear portion 107 of the support base 101, and a guide 108 for slidably receiving the footplate 200 in a front portion 109 of the support base 101 opposite the rear portion 107.

The frame 100 of the seat box 1 according to the invention further comprises a pair of transverse supports 110a, 110b which extend transversely to the support base 100 between the front portion 109 of the support base 101 and a fastening portion 111 of the support structure 102 facing the rear portion 107 of the support base 101, so as to support the support structure 102 in a position spaced apart vertically from the support base 101.

In this document, the expression "position spaced apart vertically from the support base 101" signifies that this position is spaced apart in a perpendicular direction from the support base 101.

It should be noted that, more generally, the transverse supports 110a, b can extend transversely between the support structure 102 and the support base 101 and can be fastened in respective generally opposed portions, one facing forwards and the other facing backwards relative to the support structure 102 and to the support base 101. In other words, as an alternative to the embodiment illustrated herein, the supports may also extend between a rear portion 107 of the support base 101 and a portion of the support structure 102 facing the front portion 109 of the support base 101.

This, in general, allows the support structure 102 being supported in a position spaced apart vertically from the support base 101.

Preferably, the transverse supports 110a, 110b extend solely between the aforesaid portions 109 and 111; that is to say, in the present embodiment, the transverse supports 110a, 110b are formed from tubular elements of elongate shape, the opposite ends of which are positioned at the portions 109 and 111 respectively.

It should be noted that, by providing the transverse supports 110a, 110b shaped according to the invention, it is possible to obtain a frame 100 which is lighter than the known frames, while still ensuring that the seat box can be picked up and used with sufficient freedom.

Thus a compartment is formed between the support structure 102 and the support base 101 for receiving auxiliary elements of the seat box.

With reference to Figures 1 and 2, the supporting structure 102 is a structure of hollow rectangular shape intended to hold fishing accessories.

The support structure 102 is associated integrally with the pair of transverse supports 110a, 110b in such a way that its extension is substantially parallel to that of the support base 101.

Additionally, the support structure 102 comprises attachment means 102a, 102b for accessory holder bars.

Preferably, the support base 101, the pair of transverse supports 110a, 110b and the footplate 200 are made from a set of profiled members.

In particular, the transverse supports 110a, 110b are tubular profiled members with a rectangular cross section.

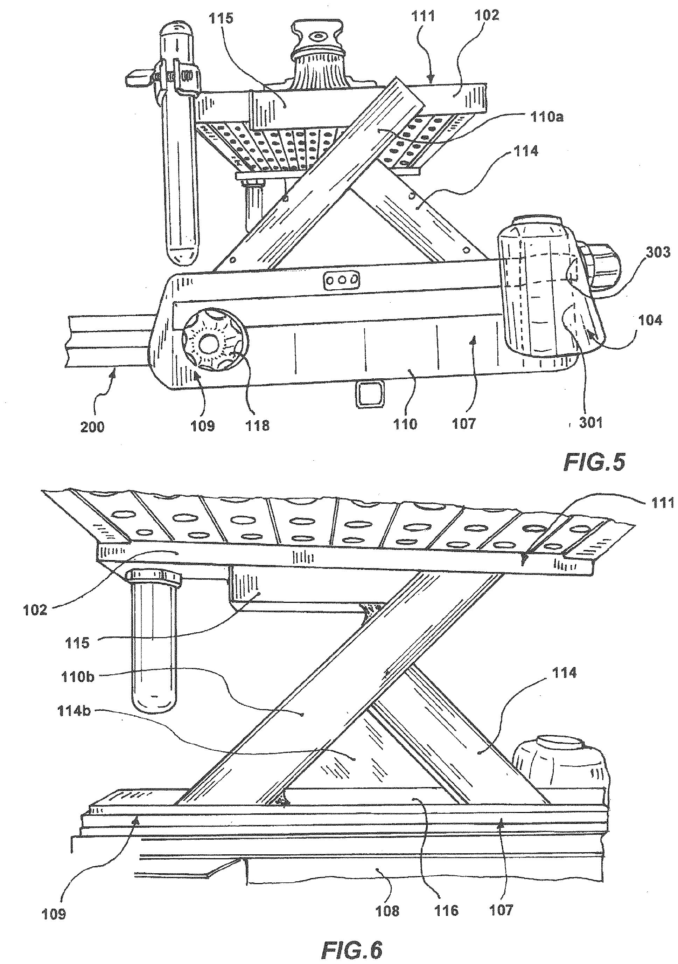

With reference to Figure 6, each transverse support 110a, 110b has an auxiliary support 114 extending from an intermediate portion of the transverse support 110a, 110b to the rear portion 107 of the support base 101.

In a preferred embodiment of the invention, illustrated in Figure 1, each transverse support 110a, 110b has a projection 115 extending towards the front portion 109 of the support base 101 in a position spaced apart vertically from the latter.

The provision of these projections 115 makes it easier to pick up the fishing seat box 1.

According to a preferred embodiment of the invention, an ornamental plate 114b is applied to each transverse support 110a, 110b and to the auxiliary support 114 in order to cover them.

According to a preferred embodiment of the invention, the frame 100 and the footplate 200 are made of aluminium alloy, in order to make the seat box particularly light, thus facilitating its transport.

With reference to Figures 1 to 4, the footplate 200 comprises a pair of lateral bars 205 parallel to one another and connected transversely by slats 206.

The support base 101 comprises a pair of lateral profiled members 116 which are parallel to one another and are connected by means of a pair of rails 117 in the rear portion 107 of the support base 101.

The lateral profiled members 116 are longitudinally grooved, their grooves being shaped so as to slidably receive the corresponding lateral bar 205 of the footplate 200 so that the latter can be translated between a retracted position P1 and the extended position P2, as described more fully below.

Still with reference to this embodiment of the invention, the pair of transverse supports 110a, 110b extend between the front portion 109 of the support base 101 and the fastening portion 111 of the support structure 102 on the lateral profiled members 116.With reference to Figures 1 and 2, the footplate 200 is translatable on the guide 108 in such a way that it can be placed, alternatively, in the retracted position P1 and in the extended position P2 in which the footplate 200 is partially pulled out of the guide 108.

As may be seen in Figure 2, a predominant part of the footplate 200 is inserted into the guide 108 when the footplate is in the retracted position P1.

Preferably, when the footplate 200 is in the retracted position P1, only its first portion 204 is pulled out of the guide 108.

This advantageously makes it possible to provide a fishing seat box which has particularly compact dimensions and is therefore characterized by limited overall dimensions, thus facilitating its movement.

With reference to Figure 5, the support base 101 of the seat base 1 comprises locking means 118 for locking the footplate 200 in the retracted position P1 and in the extended position P2. The locking means 118 advantageously enable the footplate 200 to be locked in a plurality of extended positions P2, so that the degree to which the footplate is pulled out of the guide 108 can be continuously regulated.

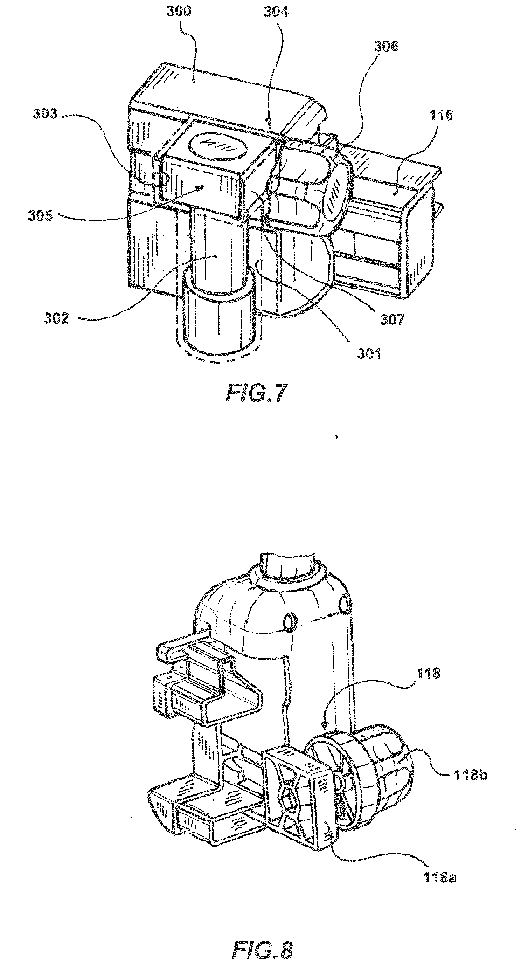

In particular, as partially illustrated in Figure 8, the locking means 118 comprise a plate 118a and a knob 118b, the rotation of which forces the plate 118a to lock the lateral bars 204 of the footplate 200 by friction.

It should also be noted that pulling out the footplate 200 from the guide 108 causes the first portion 204 of the footplate 200 to be drawn away from the rear portion 107 of the support base 101, thereby increasing the distance between the respective pairs of support legs 105, 106, 202, 203.

This enables the user to adapt the fishing seat box 1 to the location and the type of supporting surface on which it is placed, for example a river bank, an area of flat ground, or the bottom of a boat, thus making the practice of fishing more comfortable for the user.

With reference now to Figures 2, 3 and 7, the support legs 105, 106, 202, 203 are each formed from a cylindrical stem C1 having a foot C2 intended to come into contact with a supporting surface in order to keep the frame 100 and the footplate 200 raised above this surface.

Preferably, the number of support legs 105, 106, 202, 203 of the seat box 1 is four.

According to the preferred embodiment of the invention, the attachment means 104, 201 are configured so as to associate the support legs 105, 106, 202, 203 with the frame 100 and with the footplate 200 respectively, thus allowing the distance between the frame 100 (and the footplate 200 respectively) and the supporting surface to be adjusted so that the fishing seat box 1 can be positioned at a desired height.

The attachment means 104, 201 for the support legs 105, 106, 202, 203 comprise a tubular seat 300 fastened to the frame 100 (or to the footplate 200). The tubular seat 300 is provided with a longitudinal passage 301 shaped to receive slidably a portion 302 of the support leg 105, 106, 202, 203, and with a transverse passage 303 communicating with the longitudinal passage 301.

The attachment means 104, 201 further comprise a locking member 304 comprising a rigid body 305 received slidably in the transverse passage 303, and a knob 306 that can be screwed into a terminal portion 307 of the rigid body 305 in order to vary the extension of the rigid body 305 which projects inside the longitudinal passage 301.

When one of the legs 105, 106, 202, 203 is inserted into the tubular seat 300, the operation of the knob 306 is adapted to push the rigid body 305 towards the inside of the longitudinal passage 301 in such a way that the latter bears, at least partially, against the portion 302 of the support leg 105, 106, 202, 203 when it is inserted into the tubular seat 300, thus holding it stably in place.

Advantageously, the provision of the rigid body 305 for bearing against a portion 302 of the support leg 105, 106, 202, 203 makes it possible to provide a particularly reliable retaining device, capable of retaining the support leg 105, 106, 202, 203 in a stable manner, even in the presence of sudden external stresses to which the seat box may be subjected.

The user can therefore adjust the height of the seat box 1 so as to bring the seat 103 to a substantially horizontal position, even if the supporting surface is more or less inclined and/or uneven (like the surface of a river bank, for example).

Thus the invention resolves the problem which was proposed, while providing a number of advantages. In particular, the fishing seat box according to the present invention is found to be particularly robust and light, so that it can easily be transported by its user.

## Claims

1. A fishing seat box (1) comprising:
• a footplate (200), of substantially rectangular shape, comprising attachment means (201) for a first pair of support legs (202, 203) in a first portion (204) of the footplate;
• a frame (100) comprising:
i. a support base (101) of substantially rectangular shape, comprising further attachment means (104) for a second pair of support legs (105, 106) in a rear portion (107) of the support base (101), and a guide (108) for slidably receiving the footplate (200) in a front portion of the support base (101); and
ii. a support structure (102) to which a seat (103) of the seat box (1) is fastened or fastenable;
• the footplate (200) being translatable on the guide (108) in such a way that it can be placed, alternatively, in a retracted position (P1) and in an extended position (P2) in which the footplate (200) is partially pulled out of the guide (108);
• **characterized in that**
• the frame (100) further comprises a pair of transverse supports (110a, 110b) which extend transversely between the support structure (102) and the support base (101) and which are each fastened to respective opposed portions (109, 111) of the support structure (102) and the support base (101), respectively, one (109) of the opposed portion (109, 111) facing forwards relative to the support structure (102) and to the support base (101) and the other (111) of the opposed portion (109, 111) facing backwards relative to the support structure (102) and to the support base (101).

2. A fishing seat box according to the preceding claim, wherein the footplate (200) and the frame (100) are made of aluminium alloy.

3. A fishing seat box according to either of the preceding claims, wherein the predominant part of the footplate (200) is inserted into the guide (108) when the footplate is in the retracted position (P1).

4. A fishing seat box according to any one of the preceding claims, wherein the support base (101) comprises locking means (118) for locking the footplate (200) in the retracted position (P1) and in the extended position (P2).

5. A fishing seat box according to any one of the preceding claims, wherein each transverse support (110a, 110b) has an auxiliary support (114) extending from an intermediate portion of the transverse support (110a, 110b) to the rear portion (107) of the support base (101).

6. A fishing seat box according to any one of the preceding claims, wherein each transverse support (110a, 110b) has a projection (115) extending towards the front portion (109) of the support base (101) in a position spaced apart vertically from the latter.

7. A fishing seat box according to any one of the preceding claims, wherein the footplate (200), the support base (101) and the pair of transverse supports (110a, 110b) are made from a set of profiled members.

8. A fishing seat box according to Claim 7, wherein the pair of supports (110a, 110b) are tubular profiled members having a rectangular cross section.

9. A fishing seat box according to Claim 7 or 8, wherein the footplate (200) comprises a pair of lateral bars (205) parallel to one another and transversely connected by slats (206), and wherein the support base (101) comprises a pair of lateral profiled members (116) parallel to one another and longitudinally grooved, the grooves being shaped so as to receive slidably the corresponding lateral bars (205) of the footplate (200) so that the footplate can be translated between the retracted position (P1) and the extended position (P2).

10. A fishing seat box according to any one of the preceding claims, wherein the attachment means (104, 201) for the support legs (105, 106, 202, 203) comprise:
• a tubular seat (300) fastened to the frame (100) or footplate (200) and provided with a longitudinal passage (301) shaped to receive slidably a portion (302) of the support leg (105, 106, 202, 203), and with a transverse passage (303) communicating with the longitudinal passage (301); and
• a locking member (304) comprising a rigid body (305) received slidably in the transverse passage (303), and a knob (306) that can be screwed into a terminal portion (307) of the rigid body (305) in order to vary the extension of the rigid body (305) which projects inside the longitudinal passage (301);
wherein the operation of the knob (306) is adapted to push the rigid body (305) towards the inside of the longitudinal passage (301) in such a way that the latter bears, at least partially, against the portion (302) of the support leg (105, 106, 202, 203) when it is inserted into the tubular seat (300), thus holding it stably in place.

## Patentansprüche

1. Angel-Sitzplatz (1), umfassend:
- eine Fußplatte (200) mit im Wesentlichen rechtwinkliger Form, die eine Befestigungseinrichtung (201) für ein erstes Paar von Stützbeinen (202, 203) in einem ersten Bereich (204) der Fußplatte aufweist;
- einen Rahmen (100), umfassend:
i. eine Abstützbasis (101) mit im Wesentlichen rechtwinkliger Form, die ferner eine Befestigungseinrichtung (104) für ein zweites Paar von Stützbeinen (105, 106) in einem hinteren Bereich (107) der Abstützbasis (101) und eine Führung (108) zum gleitbeweglichen Aufnehmen der Fußplatte (200) in einem vorderen Bereich der Abstützbasis (101) aufweist, und
ii. eine Abstützanordnung (102), an der ein Sitz (103) des Sitzplatzes (1) befestigt oder befestigbar ist;
- wobei die Fußplatte (200) auf der Führung (108) derart verschiebbar ist, dass sie alternativ in einer zurückgezogenen Position (P1) und in einer erweiterten Position (P2), in der die Fußplatte (200) teilweise aus der Führung (108) herausgezogen ist, angeordnet werden kann;
- **dadurch gekennzeichnet, dass**
- der Rahmen (100) ferner ein Paar von Querträgern (110a, 110b) aufweist, die sich quer zwischen der Abstützanordnung (102) und der Abstützbasis (101) erstrecken und jede jeweils mit entsprechenden gegenüberliegenden Bereichen (109, 111) der Abstützanordnung (102) und der Abstützbasis (101) befestigt sind, wobei der eine (109) der gegenüberliegenden Bereiche (109, 111) nach vorn bezüglich der Abstützanordnung (102) und der Abstützbasis (101) weist und der andere (111) der gegenüberliegenden Bereiche (109, 111) nach hinten bezüglich der Abstützanordnung (102) und der Abstützbasis (101) weist.

2. Angel-Sitzplatz gemäß dem vorhergehenden Anspruch, wobei die Fußplatte (200) und der Rahmen (100) aus einer Aluminiumlegierung hergestellt sind.

3. Angel-Sitzplatz gemäß einem der vorhergehenden Ansprüche, wobei der überwiegende Teil der Fußplatte (200) in der Führung (108) eingesetzt ist, wenn sich die Fußplatte in der zurückgezogenen Position (P1) befindet.

4. Angel-Sitzplatz gemäß einem der vorhergehenden Ansprüche, wobei die Abstützbasis (101) eine Verriegelungseinrichtung (118) zum Verriegeln der Fußplatte (200) in der zurückgezogenen Position (P1) und in der erweiterten Position (P2) aufweist.

5. Angel-Sitzplatz gemäß einem der vorhergehenden Ansprüche, wobei jeder Querträger (110a, 110b) einen Hilfsträger (114) aufweist, der sich von einer Zwischenposition des Querträgers (110a, 110b) zum hinteren Bereich (107) der Abstützbasis (101) erstreckt.

6. Angel-Sitzplatz gemäß einem der vorhergehenden Ansprüche, wobei jeder Querträger (110a, 110b) einen Vorsprung (115) aufweist, der sich zum vorderen Bereich (109) der Abstützbasis (101) in eine Position erstreckt, die vertikal von Letzterem beabstandet ist.

7. Angel-Sitzplatz gemäß einem der vorhergehenden Ansprüche, wobei die Fußplatte (200), die Abstützbasis (101) und das Paar von Querträgern (110a, 110b) aus einem Satz von Profilelementen hergestellt sind.

8. Angel-Sitzplatz gemäß Anspruch 7, wobei das Paar von Trägern (110a, 110b) rohrförmige Profilelemente mit einem rechtwinkligen Querschnitt sind.

9. Angel-Sitzplatz gemäß Anspruch 7 oder 8, wobei die Fußplatte (200) ein Paar von seitlichen Stäben (205) aufweist, die parallel zueinander sind und quer mit Leisten (206) verbunden sind, und wobei die Abstützbasis (101) ein Paar von seitlichen Profilelementen (116) aufweist, die parallel zueinander und in Längsrichtung genutet sind, wobei die Nuten derart ausgebildet sind, um gleitbeweglich die entsprechenden Stäbe (205) der Fußplatte (200) aufzunehmen, so dass die Fußplatte zwischen der zurückgezogenen Position (P1) und der erweiterten Position (P2) verschoben werden kann.

10. Angel-Sitzplatz gemäß einem der vorhergehenden Ansprüche, wobei die Befestigungseinrichtungen (104, 201) für die Stützbeine (105, 106, 202, 203) aufweisen:
- einen rohrförmigen Sitz (300), der am Rahmen (100) oder der Fußplatte (200) befestigt ist, und der mit einem Längsdurchgang (301), der ausgebildet ist, um gleitbeweglich einen Bereich (302) des Stützbeines (105, 106, 202, 203) aufzunehmen, und mit einem schrägen Durchgang (303) versehen ist, der mit dem Längsdurchgang (301) in Verbindung ist; und
- ein Verriegelungselement (304) mit einem starren Körper (305), der gleitbeweglich in dem schrägen Durchgang (303) aufgenommen ist, und mit einem Knopf, der in einen Anschlussbereich (307) des starren Körpers (305) geschraubt werden kann, um die Erweiterung des starren Körpers (305) zu verändern, der in den Längsdurchgang (301) hineinragt;
- wobei die Betätigung des Knopfes (306) angepasst ist, um den starren Körper (305) zur Innenseite des Längsdurchgangs (301) derart zu drücken, dass Letzterer zumindest teilweise am Bereich (302) des Stützbeines (105, 106, 202, 203) anliegt, wenn er in den rohrförmigen Sitz (300) eingesetzt wird, wodurch er stabil festgehalten wird.

## Revendications

1. Panier-siège de pêche (1) comprenant :
- un repose-pieds (200), d'une forme sensiblement rectangulaire, comprenant des moyens de fixation (201) pour une première paire de montants de support (202, 203) dans une première partie (204) du repose-pieds ;
- un cadre (100) comprenant :
i. une base de support (101) de forme sensiblement rectangulaire, comprenant d'autres moyens de fixation (104) pour une seconde paire de montants de support (105, 106) dans une partie arrière (107) de la base de support (101), et un guide (108) pour recevoir de manière coulissante le repose-pieds (200) dans une partie avant de la base de support (101) ; et
ii. une structure de support (102) à laquelle un siège (103) du panier-siège (1) est fixé ou fixable ;
- le repose-pieds (200) pouvant être déplacé sur le guide (108) de manière à pouvoir être placé, en variante, dans une position rentrée (P1) et dans une position sortie (P2) dans laquelle le repose-pieds (200) est partiellement tiré hors du guide (108) ;
- **caractérisé en ce que**
- le cadre (100) comprend en outre une paire de supports transversaux (110a, 110b) qui s'étendent transversalement entre la structure de support (102) et la base de support (101) et qui sont chacun fixés à des parties opposées (109, 111) respectives de la structure de support (102) et la base de support (101), respectivement, l'une (109) de la partie opposée (109, 111) étant orientée vers l'avant par rapport à la structure de support (102) et à la base de support (101) et l'autre (111) de la partie opposée (109, 111) étant orientée vers l'arrière par rapport à la structure de support (102) et à la base de support (101).

2. Panier-siège de pêche selon la revendication précédente, dans lequel le repose-pieds (200) et le cadre (100) sont en alliage d'aluminium.

3. Panier-siège de pêche selon l'une quelconque des revendications précédentes, dans lequel la partie prédominante du repose-pieds (200) est insérée dans le guide (108) lorsque le repose-pieds est dans la position rentrée (P1).

4. Panier-siège de pêche selon l'une quelconque des revendications précédentes, dans lequel la base de support (101) comprend des moyens de verrouillage (118) pour verrouiller le repose-pieds (200) dans la position rentrée (P1) et dans la position sortie (P2).

5. Panier-siège de pêche selon l'une quelconque des revendications précédentes, dans lequel chaque support transversal (110a, 110b) possède un support auxiliaire (114) s'étendant d'une partie intermédiaire du support transversal (110a, 110b) à la partie arrière (107) de la base de support (101).

6. Panier-siège de pêche selon l'une quelconque des revendications précédentes, dans lequel chaque support transversal (110a, 110b) présente une projection (115) s'étendant vers la partie avant (109) de la base de support (101) dans une position espacée verticalement de cette dernière.

7. Panier-siège de pêche selon l'une quelconque des revendications précédentes, dans lequel le repose-pieds (200), la base de support (101) et la paire de supports transversaux (110a, 110b) sont constitués d'un ensemble d'éléments profilés.

8. Panier-siège de pêche selon la revendication 7, dans lequel la paire de supports (110a, 110b) sont des éléments profilés tubulaires ayant une section transversale rectangulaire.

9. Panier-siège de pêche selon la revendication 7 ou 8, dans lequel le repose-pieds (200) comprend une paire de barres latérales (205) parallèles l'une à l'autre et reliées transversalement par des lames (206), et dans lequel la base de support (101) comprend une paire d'éléments profilés latéraux (116) parallèles l'un à l'autre et rainurés longitudinalement, les rainures étant formées de sorte à recevoir de manière coulissante les barres latérales (205) correspondantes du repose-pieds (200) de sorte que le repose-pieds puisse être déplacé entre la position rentrée (P1) et la position sortie (P2).

10. Panier-siège de pêche selon l'une quelconque des revendications précédentes, dans lequel les moyens de fixation (104, 201) pour les pieds de support (105, 106, 202, 203) comprennent :
- un siège tubulaire (300) fixé au cadre (100) ou au repose-pieds (200) et pourvu d'un passage longitudinal (301) formé pour recevoir de manière coulissante une partie (302) du pied de support (105, 106, 202, 203), et d'un passage transversal (303) communiquant avec le passage longitudinal (301) ; et
- un élément de verrouillage (304) comprenant un corps rigide (305) reçu de manière coulissante dans le passage transversal (303), et un bouton (306) qui peut être vissé dans une partie terminale (307) du corps rigide (305) afin de faire varier l'extension du corps rigide (305) qui se projette à l'intérieur du passage longitudinal (301) ; dans lequel l'actionnement du bouton (306) permet de pousser le corps rigide (305) vers l'intérieur du passage longitudinal (301) de manière que ce dernier vienne reposer, au moins partiellement, contre la partie (302) du pied de support (105, 106, 202, 203) lorsqu'il est inséré dans le siège tubulaire (300), le maintenant ainsi en place d'une manière stable.
